# EUROPEAN PATENT APPLICATION

(11) **EP 4 797 376 A1**
(43) Date of publication of application: **26.08.2026**
(21) Application number: 25867171.8
(22) Date of filing: 07.07.2025
(51) Int. Cl.: H01M 10/42, H01M 10/04, G01N 23/083, G01N 23/18

(54) **BATTERY INSPECTION DEVICE AND BATTERY MANUFACTURING SYSTEM COMPRISING SAME**

(30) Priority: 29.11.2024 KR 20240175606
(71) Applicant: LG ENERGY SOLUTION, LTD., Seoul 07335 (KR)
(72) Inventor: LEE, Bo Ram, Daejeon 34122 (KR)
(74) Representative: Goddar, Heinz J.
(86) International application number: PCT/KR2025/009717
(87) International publication number: WO 2026/116649

(57) **Abstract**

A battery inspection apparatus according to the present disclosure includes an electromagnetic wave emitter device configured to emit electromagnetic waves toward a secondary battery, an electromagnetic wave detector device configured to detect the electromagnetic waves passing through the secondary battery, a rotational force transmitter configured to be coupled to the secondary battery, and a main movement device configured to apply pressure to the rotational force transmitter to rotate and move the secondary battery with respect to a battery movement direction while the electromagnetic wave detector device detects the electromagnetic waves passing through the secondary battery.

## Description

### TECHNICAL FIELD

### CROSS-REFERENCE TO RELATED APPLICATIONS

This application is based on and claims priority from Korean Patent Application No. 10-2024-0175606 filed on November 29, 2024 with the Korean Intellectual Property Office, the disclosure of which is incorporated herein in its entirety by reference.

### TECHNICAL FIELD

The present disclosure relates to a battery inspection apparatus and a battery manufacturing system including the same. More particularly, the present disclosure relates to a battery inspection apparatus configured not to have a specific time allocated for inspection, and a battery manufacturing system including the same.

### BACKGROUND

A process of manufacturing a secondary battery includes the step of inspecting the secondary battery to check for defects. In particular, the step of inspecting the secondary battery in a non-destructive manner requires multidirectional measurement of defects in the secondary battery.

To identify the secondary battery from multiple directions, it is necessary to measure the condition of the secondary battery from multiple angles by rotating the secondary battery. For the step of inspecting the secondary battery, it is necessary to transport the secondary battery to a specified location, and the time required for inspection increases the process time before shipment of the completed secondary battery.

The above-described background is information possessed or acquired by the inventor in the process of deriving the present disclosure, and is not necessarily the prior art published and known to the general public before the time of filing.

### DISCLOSURE

### TECHNICAL PROBLEM

The present disclosure is designed to solve the above-described problems, and therefore the present disclosure is directed to providing a battery inspection apparatus for reducing the time required to inspect a secondary battery and a battery inspection system including the same.

The technical problems to be solved by this disclosure are not limited to the aforementioned technical problems, and these and other technical problems will be clearly understood by persons having ordinary skill in the technical field pertaining to the present disclosure from the following description.

### TECHNICAL SOLUTION

A battery inspection apparatus according to an embodiment of the present disclosure includes an electromagnetic wave emitter device configured to emit electromagnetic waves toward a secondary battery, an electromagnetic wave detector device configured to detect the electromagnetic waves passing through the secondary battery, a rotational force transmitter configured to be coupled to the secondary battery, and a main movement device configured to apply pressure to the rotational force transmitter to rotate and move the secondary battery with respect to a battery movement direction while the electromagnetic wave detector device detects the electromagnetic waves passing through the secondary battery.

The rotational force transmitter may include a toothed gear protruding toward the main movement device.

The main movement device may include a main gear meshing portion configured to mesh with the toothed gear.

The main gear meshing portion may be configured to move in a same direction as the battery movement direction.

The battery inspection apparatus may include a sub movement device located at a side opposite to the main movement device with respect to the secondary battery and configured to support the secondary battery.

The main movement device and the sub movement device may extend along the battery movement direction.

The rotational force transmitter may include a toothed gear protruding toward the main movement device, the main movement device may include a main gear meshing portion configured to mesh with the toothed gear, and the sub movement device may include a sub gear meshing portion configured to mesh with the toothed gear at a side opposite to the main gear meshing portion.

The sub gear meshing portion may move in a contrary direction to the main gear meshing portion.

The secondary battery may be cylindrical in shape, and the rotational force transmitter may include a transmitter body having a battery accommodation groove that conforms to the shape of the secondary battery.

The rotational force transmitter may include a toothed gear protruding toward the main movement device, and the toothed gear may be disposed around an outer circumference of the transmitter body.

The rotational force transmitter may include a pair of rotational force transmitters, and the pair of rotational force transmitters may be each coupled to each of two ends in an extension direction of a rotational axis of the secondary battery.

The rotational force transmitter may be coupled to the secondary battery by an interference fit.

The rotational force transmitter may have a magnet accommodated in the battery accommodation groove, and the rotational force transmitter and the secondary battery may be coupled by a magnetic force of the magnet.

The electromagnetic wave emitter device and the electromagnetic wave detector device may be located at an outside of the main movement device, facing each other.

The electromagnetic waves may be X-rays.

A battery manufacturing system according to an embodiment of the present disclosure includes a first manufacturing apparatus configured to perform a process on a secondary battery, a second manufacturing apparatus spaced apart from the first manufacturing apparatus and configured to perform a process on the secondary battery after the process of the first manufacturing apparatus, and a battery inspection apparatus configured to inspect the secondary battery while moving the secondary battery from the first manufacturing apparatus to the second manufacturing apparatus, wherein the battery inspection apparatus includes an electromagnetic wave emitter device configured to emit electromagnetic waves toward the secondary battery, an electromagnetic wave detector device configured to detect the electromagnetic waves passing through the secondary battery, a rotational force transmitter configured to be coupled to the secondary battery, and a main movement device configured to apply pressure to the rotational force transmitter to rotate and move the secondary battery with respect to a battery movement direction while the electromagnetic wave detector device detects the electromagnetic waves passing through the secondary battery.

The rotational force transmitter may include a toothed gear protruding toward the main movement device.

The main movement device may include a main gear meshing portion configured to mesh with the toothed gear.

The main gear meshing portion may be configured to move in a same direction as the battery movement direction.

A battery inspection apparatus according to an embodiment of the present disclosure includes a rotational force transmitter configured to be coupled to a secondary battery, and a main movement device configured to apply pressure to the rotational force transmitter to rotate and move the secondary battery with respect to a battery movement direction.

### ADVANTAGEOUS EFFECTS

The battery inspection apparatus according to an embodiment of the present disclosure moves the secondary battery while rotating the secondary battery and thus does not have a specific time allocated for inspection of the secondary battery, thereby reducing the time required to inspect the secondary battery.

The battery inspection system according to an embodiment of the present disclosure includes the above-described battery inspection apparatus and thus may have the above-described effects.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a conceptual diagram of a battery inspection apparatus according to a comparative example of the present disclosure.
FIG. 2 is a perspective view of a secondary battery and a rotational force transmitter included in a battery inspection apparatus according to a first embodiment of the present disclosure.
FIG. 3 is a perspective view of the rotational force transmitter shown in FIG. 2.
FIG. 4 is a conceptual diagram of a battery manufacturing system including the battery inspection apparatus including the rotational force transmitter shown in FIG. 2.
FIG. 5 is a conceptual diagram of a battery manufacturing system according to a second embodiment of the present disclosure.
FIG. 6 is a conceptual diagram of a battery manufacturing system according to a third embodiment of the present disclosure.
FIG. 7 is a conceptual diagram of a battery manufacturing system according to a fourth embodiment of the present disclosure.
FIG. 8 is a conceptual diagram of a battery manufacturing system according to a fifth embodiment of the present disclosure.
FIG. 9 is a perspective view of a rotational force transmitter according to a sixth embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "top-bottom direction", "lower", and "front-rear direction" as used herein are defined on the basis of the drawings, and the shape and location of each element is not limited by these terms.

Hereinafter, the embodiments according to the present disclosure will be described in detail with reference to the accompanying drawings.

### First embodiment

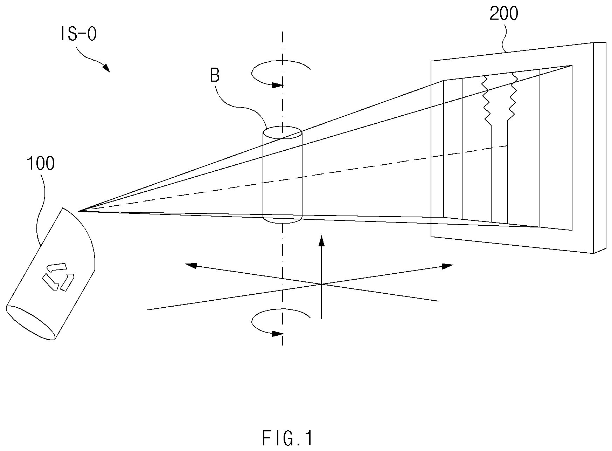

FIG. 1 is a conceptual diagram of a battery inspection apparatus IS-0 according to a comparative example of the present disclosure.

Referring to FIG. 1, the battery inspection apparatus IS-0 according to the comparative example of the present disclosure will be described.

As shown in FIG. 1, the battery inspection apparatus IS-0 for inspecting a secondary battery B may be provided.

The secondary battery B may be cylindrical in shape. However, the secondary battery B may be prismatic or pouch-shaped, if necessary. The battery inspection apparatus IS-0 according to the comparative example may have a space for inspection of the secondary battery B. Accordingly, when the secondary battery B is placed inside the battery inspection apparatus IS-0, the battery inspection apparatus IS-0 may inspect the secondary battery B.

The battery inspection apparatus IS-0 may include an electromagnetic wave emitter device 100 and an electromagnetic wave detector device 200. The electromagnetic wave emitter device 100 may be configured to emit electromagnetic waves toward the secondary battery B. Here, the electromagnetic waves may refer to X-rays. However, if necessary, the electromagnetic waves may be visible light, and accordingly, the electromagnetic wave detector device 200 may be a vision camera. Further, the inspection of the secondary battery B may be done with the naked eye, rather than the electromagnetic wave emitter device 100 and the electromagnetic wave detector device 200. The electromagnetic waves, for example, X-rays may travel through a specific part of the secondary battery B. The electromagnetic waves emitted from the electromagnetic wave emitter device 100 may be directed toward the electromagnetic wave detector device. The electromagnetic wave detector device 200 may detect a defect or foreign matter in the secondary battery B by detecting electromagnetic waves that have passed through the secondary battery B and electromagnetic waves that have not passed through the secondary battery B. More specifically, when a signal measured by the electromagnetic wave detector device is analyzed by a control unit, the internal configuration of the secondary battery B may be recognized by the signal analysis, and a defect in the secondary battery B may be identified through the recognized configuration of the secondary battery B. For example, this measurement method may be referred to as a Computed Tomography (CT) method.

In this instance, the configuration of the secondary battery B in only one direction may be identified by the electromagnetic waves emitted in one direction of the secondary battery B. To detect internal defects all over the entire secondary battery B, it is necessary to observe the inside of the secondary battery B from different directions. To this end, the secondary battery B may be rotated in place, and electromagnetic waves may be emitted toward the rotating secondary battery B to allow the electromagnetic wave detector device 200 to detect the inside of the secondary battery B from different angles.

However, this method requires the time for inspection after moving the secondary battery B to a specified location, resulting in increased manufacturing time of the secondary battery B. In particular, because the CT method requires a lot of time for inspection, there is a need to reduce the required time.

Hereinafter, a battery manufacturing system MS according to the first embodiment of the present disclosure designed to solve the above-described problems will be described. Additionally, it should be noted that the secondary battery B, the electromagnetic wave inspection apparatus and the electromagnetic wave detector device 200 described above are equally applied to the first embodiment of the present disclosure below.

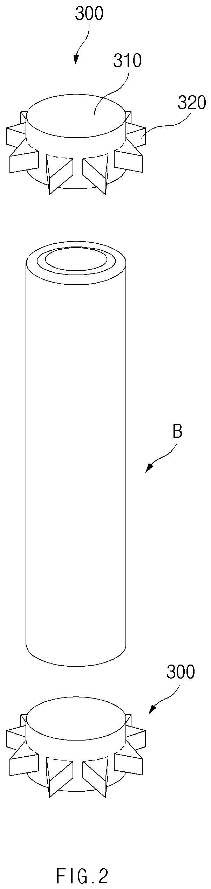

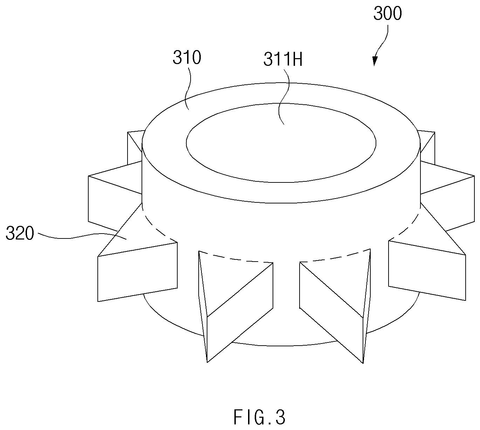

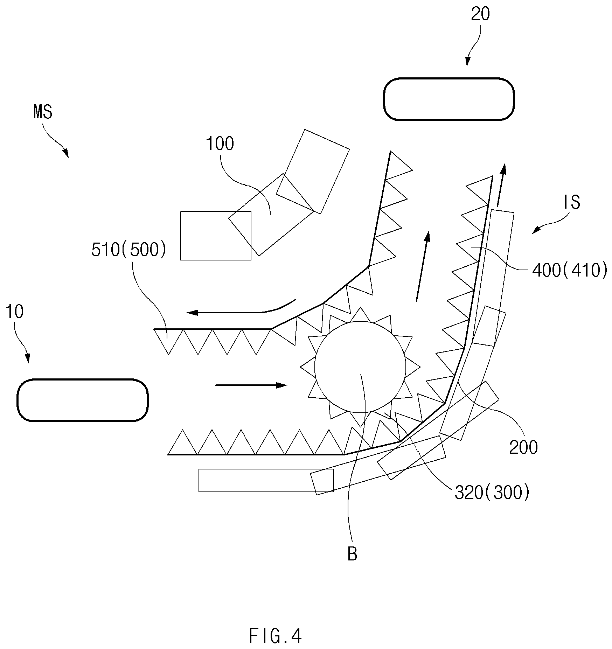

FIG. 2 is a perspective view of the secondary battery B and a rotational force transmitter 300 included in the battery inspection apparatus IS according to the first embodiment of the present disclosure. FIG. 3 is a perspective view of the rotational force transmitter 300 shown in FIG. 2. FIG. 4 is a conceptual diagram of the battery manufacturing system MS including the battery inspection apparatus IS including the rotational force transmitter 300 shown in FIG. 2.

Referring to FIGS. 2 to 4, the battery manufacturing system MS including the battery inspection apparatus IS according to the first embodiment of the present disclosure will be described.

The battery inspection apparatus IS according to the first embodiment of the present disclosure may be configured to inspect the secondary battery B during movement of the secondary battery B from a first manufacturing apparatus 10 to a second manufacturing apparatus 20 as shown in FIG. 4. In other words, the battery manufacturing system MS may include the first manufacturing apparatus 10 configured to perform a process on the secondary battery B and the second manufacturing apparatus 20 spaced apart from the first manufacturing apparatus 10 and configured to perform a process on the secondary battery B after the process of the first manufacturing apparatus 10. In addition, the battery inspection apparatus IS may be located between the first manufacturing apparatus 10 and the second manufacturing apparatus 20 to inspect the secondary battery B while moving the secondary battery B from the first manufacturing apparatus 10 to the second manufacturing apparatus 20. Further, here, the first manufacturing apparatus 10 may be configured to perform an activation step, and the second manufacturing apparatus 20 may be configured to perform a packaging step of the secondary battery B. However, the first manufacturing apparatus 10 and the second manufacturing apparatus 20 are not limited thereto, and may perform the adjacent steps.

As described above, the battery inspection apparatus IS may include the electromagnetic wave emitter device 100 configured to emit electromagnetic waves toward the secondary battery B, and the electromagnetic wave detector device 200 configured to detect electromagnetic waves passing through the secondary battery B. Further, the battery inspection apparatus IS may further include the rotational force transmitter 300 configured to be coupled to the secondary battery B. The rotational force transmitter 300 is not a component that is coupled to the secondary battery B and fixedly located at a predefined space, but conceptually, may be understood as a component of the battery inspection apparatus IS. The battery inspection apparatus IS may further include a main movement device 400 configured to apply pressure to the rotational force transmitter 300 to rotate and move the secondary battery B with respect to the battery movement direction while the electromagnetic wave detector device 200 detects electromagnetic waves passing through the secondary battery B. In other words, the secondary battery B may be rotated and moved by interactions between the main movement device 400 and the rotational force transmitter 300, and during the rotation and movement of the secondary battery B, the electromagnetic wave emitter device 100 may emit electromagnetic waves toward different directions of the secondary battery B, and the electromagnetic wave detector device 200 may detect electromagnetic wave information in each direction of the secondary battery B.

In this instance, the main movement device 400 may not directly apply pressure to the secondary battery B. When the main movement device 400 directly applies pressure to the secondary battery B, damage may occur to the appearance of the secondary battery B, increasing the defect rate of the secondary battery B. To prevent this, the rotational force transmitter 300 may be configured to allow the main movement device 400 to indirectly transmit power to the secondary battery B.

Hereinafter, the interactions between the main movement device 400 and the rotational force transmitter 300 will be described in more detail.

First, the rotational force transmitter 300 will be described. As shown in FIGS. 2 and 3, the rotational force transmitter 300 may include a pair of rotational force transmitters, and the pair of rotational force transmitters 300 may be each coupled to each of two ends in the extension direction of the rotational axis of the secondary battery B. The rotational force transmitters 300 may be each coupled to each of top and bottom of the secondary battery B as shown in FIG. 2. However, the rotational force transmitter 300 may be located at the inner position than the end of the secondary battery B, if necessary.

The rotational force transmitter 300 may include a transmitter body 310 and a toothed gear 320.

The transmitter body 310 may be formed in a cylindrical shape to conform to the shape of the secondary battery B. That is, the transmitter body 310 may have a shape that conforms to the shape of the secondary battery B, other than the cylindrical shape, if necessary. The transmitter body 310 may have a battery accommodation groove 311H that conforms to the shape of the secondary battery B. Here, the battery accommodation groove 311H may be a hole, despite its name. The transmitter body 310 may be directly coupled to the upper end and/or the lower end of the secondary battery B as shown in FIG. 2. The secondary battery B may be accommodated in the battery accommodation groove 311H and coupled to the transmitter body 310. Here, the rotational force transmitter 300, i.e., the transmitter body 310 may be coupled to the secondary battery B by an interference fit. That is, the inner diameter of the battery accommodation groove 311H may be slightly smaller than the outer diameter of the secondary battery B to secure the transmitter body 310 and the secondary battery B relative to each other. However, the securing method of the secondary battery B and the transmitter body 310 may include any other method, for example, groove and protrusion, if necessary.

As shown in FIG. 4, the rotational force transmitter 300 may include the toothed gear 320 protruding toward the main movement device 400. The toothed gear 320 may protrude from the transmitter body 310 as shown in FIG. 3. The toothed gear 320 may be formed integrally with the transmitter body 310. However, if necessary, the toothed gear 320 and the transmitter body 310 may be separate components, and the toothed gear 320 may be coupled to the transmitter body 310 to prevent rotation with respect to each other. The toothed gear 320 may be disposed around the outer circumference of the transmitter body 310. That is, the toothed gear 320 may include a plurality of toothed gears, and the plurality of toothed gears 320 may be arranged along the circumferential direction of the transmitter body 310. The interval of the plurality of toothed gears 320 may be set such that the toothed gears 320 mesh with a main gear meshing portion 410 of the main movement device 400 as described below.

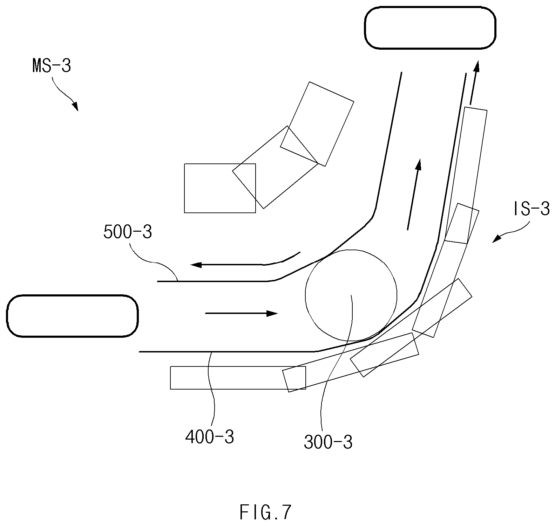

As shown in FIG. 4, the main movement device 400 may include the main gear meshing portion 410 configured to mesh with the toothed gear 320. Although FIG. 4 shows only the main gear meshing portion 410 of the main movement device 400, the main movement device 400 may further include a component (not shown) for transmitting power to the main gear meshing portion 410 or a case (not shown). In addition, if necessary, the main movement device 400 may include a component of a different shape that interacts with the rotational force transmitter 300. It will be described in more detail in the description of the fourth embodiment made with reference to FIG. 7.

In this instance, the main gear meshing portion 410 may be configured to move in the same direction as the battery movement direction. As shown in FIG. 4, during rightward or upward movement of the secondary battery B, the main gear meshing portion 410 may be moved rightward or upward along the secondary battery B together. In this instance, the rotational force transmitter 300 may be rotated and moved with the movement of the main gear meshing portion 410 by the interactions between the main gear meshing portion 410 and the toothed gear 320 of the rotational force transmitter 300. With the rotation and movement of the rotational force transmitter 300, the secondary battery B coupled to the rotational force transmitter 300 may be rotated and moved.

The battery inspection apparatus IS may further include a sub movement device 500 located at the side opposite to the main movement device 400 with respect to the secondary battery B and configured to support the secondary battery B. As shown in FIG. 4, the sub movement device 500 and the main movement device 400 may support the secondary battery B at opposite sides.

The main movement device 400 and the sub movement device 500 may extend along the battery movement direction. Accordingly, the main movement device 400 and the sub movement device 500 may guide the secondary battery B to move along a predefined path during the movement of the secondary battery B.

The sub movement device 500 may include a sub gear meshing portion 510 configured to mesh with the toothed gear 320 at the side opposite to the main gear meshing portion 410. Accordingly, the sub gear meshing portion 510 may assist the rotation and movement of the rotational force transmitter 300.

In this instance, the sub gear meshing portion 510 may move in the contrary direction to the main gear meshing portion 410. As the main gear meshing portion 410 and the sub gear meshing portion 510 move in opposite directions, the rotational force transmitter 300 may be rotated.

In this instance, the electromagnetic wave emitter device and the electromagnetic wave detector device 200 may be located at the outside of the main movement device 400, facing each other. Through this, the electromagnetic wave detector device 200 may receive electromagnetic waves emitted from the electromagnetic wave emitter device 100.

In particular, as shown in FIG. 4, when the secondary battery B moves along a curved path, the electromagnetic wave detector device 200 may be located at a side where the path length is larger. On the basis of FIG. 4, because the right path is longer than the left path with respect to the secondary battery B, the electromagnetic wave detector device 200 may be located at the right path, and the electromagnetic wave emitter device 100 may be located at the left path on the opposite side. The electromagnetic wave detector device 200 may be positioned over a wider area to measure electromagnetic waves more sensitively, thereby increasing the measurement accuracy.

Hereinafter, different embodiments from the first embodiment will be described. The description that is shared between the first embodiment and the other embodiments is omitted, and the other embodiments will be described based on differences. In other words, obviously, necessary details not described in the other embodiments may be compensated for through the description of the first embodiment.

### Second embodiment

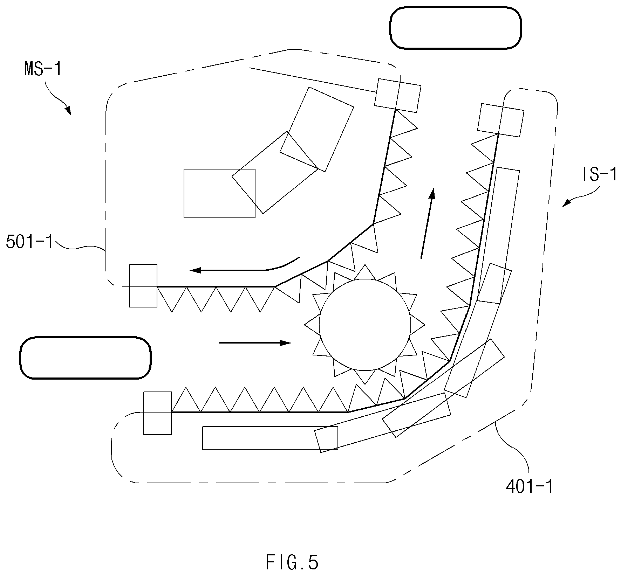

FIG. 5 is a conceptual diagram of the battery manufacturing system MS-1 according to the second embodiment of the present disclosure.

Referring to FIG. 5, the battery manufacturing system MS-1 including the battery inspection apparatus IS-1 according to the second embodiment of the present disclosure will be described.

The second embodiment is different from the first embodiment in that each of the main gear meshing portion 410-1 of the main movement device and the sub gear meshing portion 510-1 of the sub movement device 500-1 forms a circulating path, and the main movement device includes a main movement case 401-1 and the sub movement device includes a sub movement case 501-1.

### Third embodiment

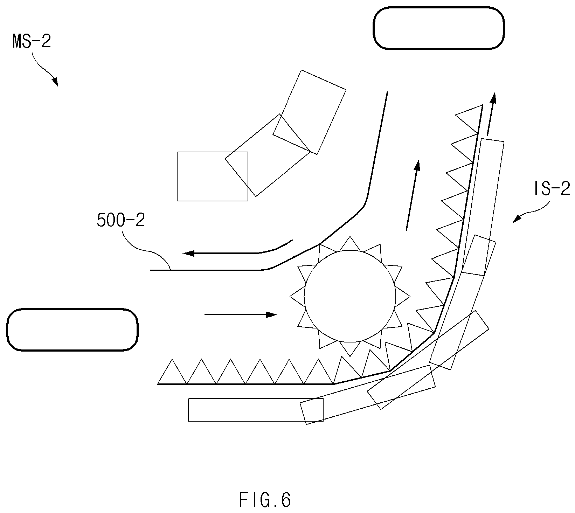

FIG. 6 is a conceptual diagram of the battery manufacturing system MS-2 according to the third embodiment of the present disclosure.

Referring to FIG. 6, the battery manufacturing system MS-2 including the battery inspection apparatus IS-2 according to the third embodiment of the present disclosure will be described.

The third embodiment is different from the first embodiment in that the sub movement device 500-2 does not include the sub gear meshing portion 510.

As long as the sub movement device 500-2 plays a role in preventing the secondary battery B from deviating from its path, the sub movement device 500-2 is configured to support the secondary battery B and may not include a component that meshes with the rotational force transmitter 300.

### Fourth embodiment

FIG. 7 is a conceptual diagram of the battery manufacturing system MS-3 according to the fourth embodiment of the present disclosure.

Referring to FIG. 7, the battery manufacturing system MS-3 including the battery inspection apparatus IS-3 according to the fourth embodiment of the present disclosure will be described.

The fourth embodiment is different from the first embodiment in that neither the sub movement device 500-3 nor the main movement device 400-3 includes a component for meshing.

In this instance, the rotational force transmitter 300-3 may have a surface for increasing friction without gears. In this instance, the sub movement device 500-3 and the main movement device 400-3 may transmit a force to the rotational force transmitter 300-3 using the frictional force to allow the rotational force transmitter 300-3 to rotate.

### Fifth embodiment

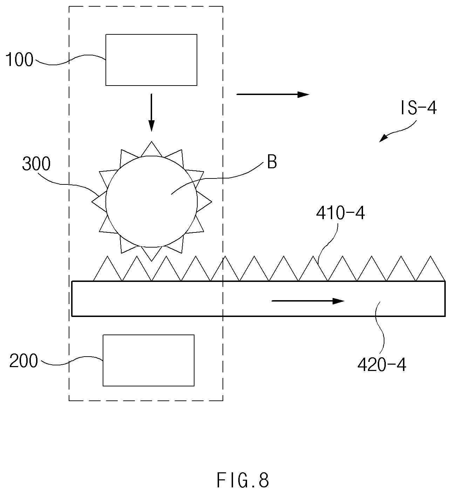

FIG. 8 is a conceptual diagram of the battery manufacturing system according to the fifth embodiment of the present disclosure.

Referring to FIG. 8, the battery manufacturing system including the battery inspection apparatus IS-4 according to the fifth embodiment of the present disclosure will be described.

The fifth embodiment is different from the first embodiment in that only the main movement device is present, and the main movement device supports the secondary battery B under the secondary battery B, and includes a stage 420-4 configured to support the main gear meshing portion 410-4.

### Sixth embodiment

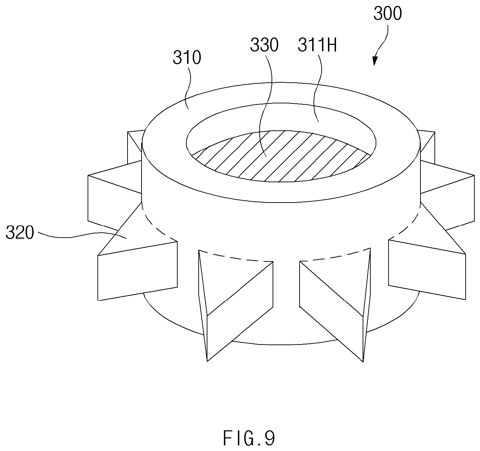

FIG. 9 is a perspective view of the rotational force transmitter 300 according to the sixth embodiment of the present disclosure.

Referring to FIG. 9, the rotational force transmitter 300 according to the sixth embodiment of the present disclosure will be described.

The sixth embodiment is different from the first embodiment in that the rotational force transmitter 300 has a magnet 330 accommodated in the battery accommodation groove 311H, and the rotational force transmitter 300 and the secondary battery B are coupled by the magnetic force of the magnet 330.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

## Claims

1. A battery inspection apparatus comprising:
an electromagnetic wave emitter device configured to emit electromagnetic waves toward a secondary battery;
an electromagnetic wave detector device configured to detect the electromagnetic waves passing through the secondary battery;
a rotational force transmitter configured to be coupled to the secondary battery; and
a main movement device configured to apply pressure to the rotational force transmitter to rotate and move the secondary battery with respect to a battery movement direction while the electromagnetic wave detector device detects the electromagnetic waves passing through the secondary battery.

2. The battery inspection apparatus according to claim 1,
wherein the rotational force transmitter includes a toothed gear protruding toward the main movement device.

3. The battery inspection apparatus according to claim 2,
wherein the main movement device includes a main gear meshing portion configured to mesh with the toothed gear.

4. The battery inspection apparatus according to claim 3,
wherein the main gear meshing portion is configured to move in a same direction as the battery movement direction.

5. The battery inspection apparatus according to claim 1, comprising:
a sub movement device located at a side opposite to the main movement device with respect to the secondary battery and configured to support the secondary battery.

6. The battery inspection apparatus according to claim 5,
wherein the main movement device and the sub movement device extend along the battery movement direction.

7. The battery inspection apparatus according to claim 5,
wherein the rotational force transmitter includes a toothed gear protruding toward the main movement device,
wherein the main movement device includes a main gear meshing portion configured to mesh with the toothed gear, and
wherein the sub movement device includes a sub gear meshing portion configured to mesh with the toothed gear at a side opposite to the main gear meshing portion.

8. The battery inspection apparatus according to claim 7,
wherein the sub gear meshing portion moves in a contrary direction to the main gear meshing portion.

9. The battery inspection apparatus according to claim 1,
wherein the secondary battery is cylindrical in shape, and
wherein the rotational force transmitter includes a transmitter body having a battery accommodation groove that conforms to the shape of the secondary battery.

10. The battery inspection apparatus according to claim 9,
wherein the rotational force transmitter includes a toothed gear protruding toward the main movement device, and
wherein the toothed gear is disposed around an outer circumference of the transmitter body.

11. The battery inspection apparatus according to claim 1,
wherein the rotational force transmitter includes a pair of rotational force transmitters, and
wherein the pair of rotational force transmitters are each coupled to each of two ends in an extension direction of a rotational axis of the secondary battery.

12. The battery inspection apparatus according to claim 1,
wherein the rotational force transmitter is coupled to the secondary battery by an interference fit.

13. The battery inspection apparatus according to claim 8,
wherein the rotational force transmitter has a magnet accommodated in the battery accommodation groove, and
wherein the rotational force transmitter and the secondary battery are coupled by a magnetic force of the magnet.

14. The battery inspection apparatus according to claim 1,
wherein the electromagnetic wave emitter device and the electromagnetic wave detector device are located at an outside of the main movement device, facing each other.

15. The battery inspection apparatus according to claim 1,
wherein the electromagnetic waves are X-rays.

16. A battery manufacturing system comprising:
a first manufacturing apparatus configured to perform a process on a secondary battery;
a second manufacturing apparatus spaced apart from the first manufacturing apparatus and configured to perform a process on the secondary battery after the process of the first manufacturing apparatus; and
a battery inspection apparatus configured to inspect the secondary battery while moving the secondary battery from the first manufacturing apparatus to the second manufacturing apparatus,
wherein the battery inspection apparatus includes:
an electromagnetic wave emitter device configured to emit electromagnetic waves toward the secondary battery;
an electromagnetic wave detector device configured to detect the electromagnetic waves passing through the secondary battery;
a rotational force transmitter configured to be coupled to the secondary battery; and
a main movement device configured to apply pressure to the rotational force transmitter to rotate and move the secondary battery with respect to a battery movement direction while the electromagnetic wave detector device detects the electromagnetic waves passing through the secondary battery.

17. The battery manufacturing system according to claim 16,
wherein the rotational force transmitter includes a toothed gear protruding toward the main movement device.

18. The battery manufacturing system according to claim 17,
wherein the main movement device includes a main gear meshing portion configured to mesh with the toothed gear.

19. The battery manufacturing system according to claim 18,
wherein the main gear meshing portion is configured to move in a same direction as the battery movement direction.

20. A battery inspection apparatus comprising:
a rotational force transmitter configured to be coupled to a secondary battery; and
a main movement device configured to apply pressure to the rotational force transmitter to rotate and move the secondary battery with respect to a battery movement direction.
